**Europäisches Patentamt**

**European Patent Office**

**Office européen des brevets**

(19)

(11) Veröffentlichungsnummer : **0 076 353**
**B1**

# EUROPÄISCHE PATENTSCHRIFT

(12)

(45) Veröffentlichungstag der Patentschrift :
05.06.85

(21) Anmeldenummer : 82100067.6

(22) Anmeldetag : 07.01.82

(51) Int. Cl.⁴ : **F 23 B   1/14, F 23 G   5/00,**
**F 23 G   5/02, F 23 K   3/14**

---

(54) Vorrichtung zur Fliessbettentgasung von Biomassen in Heizungsanlagen.

---

(30) Priorität : 25.09.81 DE 3138132

(43) Veröffentlichungstag der Anmeldung :
13.04.83 Patentblatt 83/15

(45) Bekanntmachung des Hinweises auf die Patenterteilung : 05.06.85 Patentblatt 85/23

(84) Benannte Vertragsstaaten :
**AT BE CH DE FR GB IT LI LU NL SE**

(56) Entgegenhaltungen :
DE-A- 2 356 507
DE-B- 1 248 211
FR-A- 2 303 235
FR-A- 2 472 139
STAUB REINHALTUNG DER LUFT, Band 41, Nr. 6,
Juni 1981, Seiten 199-203, Speyer, DE. R. MEIXLS-
PERGER et al.: "Emissionsuntersuchungen an Strohverbrennungsanlagen"

(73) Patentinhaber : **Friedrich Wilhelm Dörrenberg Wirts-**
**chaftliche Verbrennungs-Technik**
**D-5063 Overath-Untereschbach (DE)**

(72) Erfinder : **Prochnow, Karl-Wilhelm**
**Külheimer Mühle**
**D-5060 Bergisch Gladbach 4 (DE)**

(74) Vertreter : **Selting, Günther, Dipl.-Ing. et al**
**Deichmannhaus am Hauptbahnhof**
**D-5000 Köln 1 (DE)**

EP 0 076 353 B1

Jouve, 18, rue St-Denis, 75001 Paris, France

**Beschreibung**

Die Erfindung betrifft eine Vorrichtung zur Fließbettentgasung von Biomassen in Heizungsanlagen, mit einer Entgasungskammer, die mindestens teilweise eine feuerfeste Auskleidung aufweist und eine Tragvorrichtung zur Aufnahme von Biomasse enthält, einer aus der Entgasungskammer herausführenden Flammenkammer, mindestens einem Luft in die Entgasungskammer fördernden Gebläse und mindestens einer in einer Wand der Entgasungskammer zwischen der Auskleidung und einem äußeren Mantel vorgesehen, mit dem Gebläse verbundenen Luftkammer, der Außenluft zugeführt wird und die im Luftweg des Gebläses der Entgasungskammer vorgeschaltet ist.

Biomassen, die für Heizzwecke verwendet werden, sind beispielsweise Holz, Stroh, Torf oder andere kohlenstoffhaltige feste Brennstoffe. Derartige Materialien werden, falls sie nicht bereits in schüttfähiger Form vorliegen, zerkleinert. Beispielsweise können in den Wäldern aufgelesenes Unterholz, Holzabfälle o. dgl. zu Holzschnitzeln zerkleinert und anschließend zum Heizen benutzt werden. Auch die schalen von Kaffeebohnen, Kaffeesatz, Erdnußschalen u. dgl. lassen sich für Heizungszwecke benutzen. Derartige Materialien, die hier generell als « Biomasse » bezeichnet werden, enthalten in der Regel viel Feuchtigkeit und Verunreinigungen, z. B. Staub. Eine direkte Verbrennung der Biomasse ist insbesondere wegen der in ihr enthaltenen Feuchtigkeit nur mit einer schlechten Energieausbeute verbunden.

Zur Wärmegewinnung aus Biomassen ist die Fließbettentgasung bekannt (FR-A-2 472 139). Hierbei wird die Biomasse von einer Fördereinrichtung kontinuierlich einer Entgasungskammer zugeführt, in der eine hohe Temperatur herrscht. In der Entgasungskammer entweichen die brennbaren Gase aus der Biomasse. Durch geeignete Luftstromführung werden diese Gase in eine Flammenkammer geleitet, wo sie unter Luftzufuhr verbrennen. Die hierbei entstehende Wärme wird zur Beheizung der Entgasungskammer mitbenutzt. Da das Innere der Entgasungskammer auf einer hohen Temperatur gehalten werden muß, entsteht auch eine starke Aufheizung der Wände der Entgasungskammer. Die Außenwand der Entgasungskammer nimmt auch im Falle einer zusätzlichen thermischen Isolierung hohe Temperaturwerte an, so daß bei Berührung durch Personen Verletzungen hervorgerufen werden können. Andererseits wird durch die Entgasungskammer viel Verlustwärme abgestrahlt.

Zur Kühlung der Entgasungskammer und zur Vorheizung der zugeführten Frischluft ist bei einer bekannten Vorrichtung der eingangs genannten Art (FR-A-2 303 235) vorgesehen, daß mindestens eine Wand der Entgasungskammer zwischen der Auskleidung und einem äußeren Mantel eine mit dem Gebläse verbundene Luftkammer aufweist, der Außenluft zugeführt wird und die im Luftweg des Gebläses der Entgasungskammer vorgeschaltet ist. Der Bereich oberhalb der Entgasungskammer ist als Bunker ausgebildet, der eine Tragvorrichtung aufweist, an deren Seiten das Brennmaterial in die Entgasungskammer absinkt. Hierbei kann es vorkommen, daß zuviel Brennmaterial in die Entgasungskammer gelangt und den schwelbrand erstickt. Ferner besteht der Nachteil, daß das Gas aus der Entgasungskammer in den Bunker hinauf ansteigt und nicht in die Flammenkammer gelangt.

Der Erfindung liegt die Aufgabe zugrunde, eine Vorrichtung der eingangs genannten Art zu schaffen, die eine gleichmäßigere und intensivere Entgasung des Brennmaterials ermöglicht.

Die Lösung dieser Aufgabe besteht erfindungsgemäß darin, daß die Tragvorrichtung eine gelochte Wanne ist und daß über der Wanne eine die Biomasse heranfördernde Fördereinrichtung endet, die die Biomasse auf der Wanne vorschiebt.

Als Fördereinrichtung wird zweckmäßigerweise ein Schneckenförderer benutzt. An dem Abwurfende der Welle der Förderschnecke ist gemäß einer bevorzugten Ausführungsform der Erfindung ein Schaufelrad angebracht, das sich in einer die Biomasse aufnehmenden Wanne dreht. Das Schaufelrad, das beispielsweise nach Art einer Schiffsschraube mit Flügeln versehen sein kann, bewirkt eine ständige Umwälzung mindestens eines Teiles der in der Wanne enthaltenen Biomasse, so daß verhindert wird, daß einzelne Teile dieser Biomasse sich über längere Zeit auf dem Wannenboden absetzen. Außerdem wird eine Auflockerung der in die Wanne geförderten Biomasse erreicht. Die Folge hiervon ist eine gleichmäßigere und intensivere Entgasung.

Gemäß einer ersten Ausführungsform der Erfindung ist vorgesehen, daß das Gebläse an einem Lufteinlaß der Luftkammer angeordnet ist und Umgebungsluft ansaugt, und daß aus der Luftkammer ein erster Auslaß in der Nähe der Fördervorrichtung in die Entgasungskammer und ein zweiter Auslaß in die Flammenkammer hineinführt. Der Lufteinlaß befindet sich vorzugsweise etwa in der Mitte der Längsausdehnung der Entgasungskammer, so daß sich in der Luftkammer zwei Luftströmungen ergeben, von denen die eine in Richtung auf den Einlaß des zu entgasenden Materials und die andere in Richtung auf die Flammenkammer strömt. Damit wird eine gleichmäßige Umspülung der Entgasungskammer auf ihrer gesamten Länge mit Luft sichergestellt. Die Frischluft wird der Luftkammer unter dem Druck des Gebläses zugeführt, so daß in der Luftkammer ein Druck herrscht, der größer ist als der Atmosphärendruck.

Bei einer zweiten Ausführungsform der Erfindung ist das Gebläse im Strömungsweg der Luft hinter der Luftkammer und vor der Entgasungskammer angeordnet. Zwischen dem Gebläse und der Entgasungskammer befindet sich ein im Wärmeaustausch mit der Fördereinrichtung stehender Luftkanal. Hierbei wird die Frischluft durch den von dem Gebläse erzeugten Unterdruck in die Luftkammer eingesaugt, durchströmt diese und gelangt anschließend in den Luftkanal und von dort über das Gebläse in die Entgasungskammer bzw. die Flammenkammer. Diese Luftführung hat den Vorteil, daß die Luft, obwohl sie in der Luftkammer erwärmt worden ist, die Fördereinrichtung kühlt. Es besteht nämlich die Gefahr, daß die in die sehr heiße Entgasungskammer einmündende Fördereinrichtung sich in sehr starkem Maße erwärmt, so daß die in ihr enthaltene Biomasse in Brand gesetzt wird. Andererseits ist die Fördereinrichtung in der Regel auch empfindlich gegen starke thermische Belastungen. Wenn der Kanal der Fördereinrichtung zu hohen Temperaturdifferenzen ausgesetzt ist, kann er durch die thermisch hervorgerufenen Bewegungen die an ihn angrenzende Auskleidung der Entgasungskammer beschädigen. Durch die beschriebene Kühlung der Fördereinrichtung wird deren Temperatur begrenzt, so daß die zuvor geschilderten Nachteile vermieden werden.

Im Rahmen der Erfindung ist es auch möglich, nicht vorgeheizte Frischluft an der Wand der Fördereinrichtung entlangzuführen, um diese Luft dann anschließend der Entgasungskammer bzw. der Flammenkammer zuzuführen. Die Kühlung der Fördereinrichtung wird damit gegenüber der Kühlung mit bereits vorgeheizter Luft noch verbessert.

In der Entgasungskammer, in der das in der Biomasse enthaltene Wasser verdampft und anschließend die Entgasung durchgeführt wird, bei der kohlenstoffhaltige Schwelgase aus der Biomasse austreten, kann sich ein Brennstoffgemisch bilden, das in der Brennkammer nur unvollständig und unter starker Rauchentwicklung verbrennt. Zur Verbesserung des Ausbrandes der Schwelgase ist gemäß einer bevorzugten Weiterbildung der Erfindung vorgesehen, daß aus der Entgasungskammer mindestens ein der Saugwirkung des Gebläses ausgesetzter Absaugkanal für Schwelgase herausführt und daß die abgesaugten Schwelgase nach Vermischung mit Frischluft von dem Gebläse der Flammenkammer und/oder der Entgasungskammer zugeführt werden.

Überraschenderweise hat es sich herausgestellt, daß sich eine erheblich rückstandsärmere Verbrennung erzielen läßt, wenn ein Teil der Schwelgase aus der Entgasungskammer abgezogen, mit Frischluft vermischt und anschließend der Flammenkammer und/oder der Entgasungskammer zugeführt wird. Hierdurch entsteht eine noch bessere Durchmischung der Schwelgase mit Frischluft. Versuche haben ergeben, daß dieses Schwelgas/Frischluft-Gemisch mit weißer bzw. farbloser Flamme sehr rückstandsarm verbrennt, so daß eine sehr gute Wärmeausnutzung erreicht wird.

Gemäß einer bevorzugten Ausführungsform der Erfindung ist an einer Stirnseite der Entgasungskammer eine an das Gebläse angeschlossene saugkammer angeordnet, die mit der Luftkammer und dem Absaugkanal verbunden ist. Der Auslaß des Gebläses fördert in zwei verschiedene Kanäle, von denen einer unterhalb der Biomasse in die Entgasungskammer und der andere in die Flammenkammer mündet. Das Schwelgas/Frischluft-Gemisch wird hierbei aufgeteilt in einen ersten Anteil, der der Entgasungskammer zugeführt und einen zweiten Anteil, der der Flammenkammer zugeführt wird.

Besonders vorteilhaft ist die Tatsache, daß in der Saugkammer bzw. in dem Gebläse die Schwelgase mit vorgewärmter Frischluft vermischt werden. Dadurch wird vermieden, daß sich in den Schwelgasen enthaltener Wasserdampf kondensiert und das Wasser- und Feststoffablagerungen entstehen.

Im Folgenden werden unter Bezugnahme auf die Figuren Ausführungsbeispiele der Erfindung näher erläutert.

Es zeigen :

Figur 1 eine schematische Darstellung der gesamten Vorrichtung,

Figur 2 einen horizontalen Längsschnitt durch eine erste Ausführungsform der Entgasungs- und Verbrennungsvorrichtung,

Figur 3 einen vertikalen Längsschnitt durch die Vorrichtung nach Fig. 2,

Figur 4 einen horizontalen längsschnitt durch eine zweite Ausführungsform der Entgasungs- und Verbrennungsvorrichtung,

Figur 5 einen vertikalen Längsschnitt der Vorrichtung nach Fig. 4,

Figur 6 einen Horizontalschnitt durch eine dritte Ausführungsform der Entgasungs- und Verbrennungsvorrichtung,

Figur 7 einen vertikalen Längsschnitt der Vorrichtung nach Fig. 6, und

Figur 8 einen Querschnitt entlang der Linie VIII-VIII.

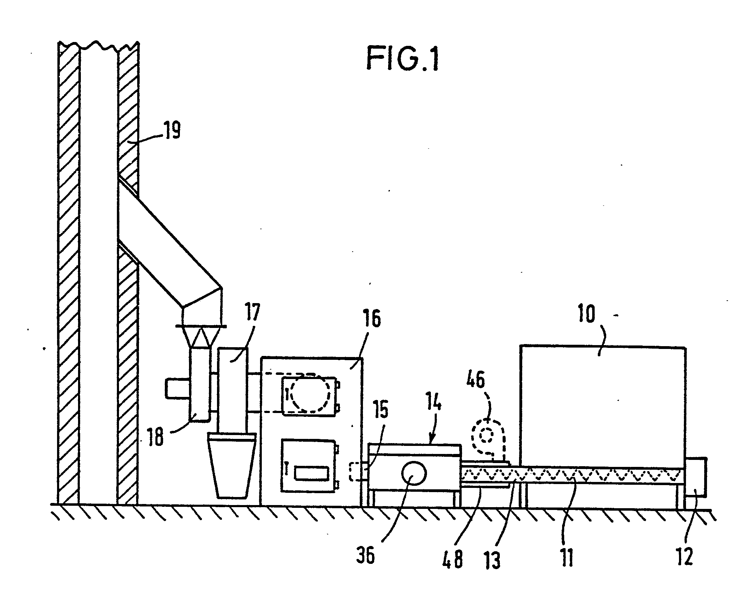

Gemäß Fig. 1 ist ein Brennstoff-Vorratsbehälter 10 vorgesehen, der die Biomasse, z. B. Schnitzel aus Holz, enthält. Über dem Behälterboden befindet sich eine eine Förderschnecke 11 enthaltende Rinne. Die im wesentlichen horizontale Förderschnecke 11, die an ihrem rückwärtigen Ende durch einen Motor 12 angetrieben ist, führt aus dem Vorratsbehälter 10 durch einen Förderkanal 13 heraus und fördert kontinuierlich den Brennstoff in die Entgasungsvorrichtung 14. An dem der Förderschnecke 11 abgewandten Ende der Entgasungsvorrichtung 14 befindet sich die Flammenkammer 15, in der die aus dem Brennstoff entwichenen Gase verbrannt werden. Die Flammenkammer 15 mündet in einen Heizkessel 16, der einen Wärmeaustauscher enthält, um die Wärme der Verbrennungsgase z. B. auf einen Wasserkreislauf zu übertragen. Der Heizkessel 16 ist an einen Staubabscheider 17 angeschlossen, der die Rauchgase über ein Abgasgebläse 18 einem Kamin 19 zuführt.

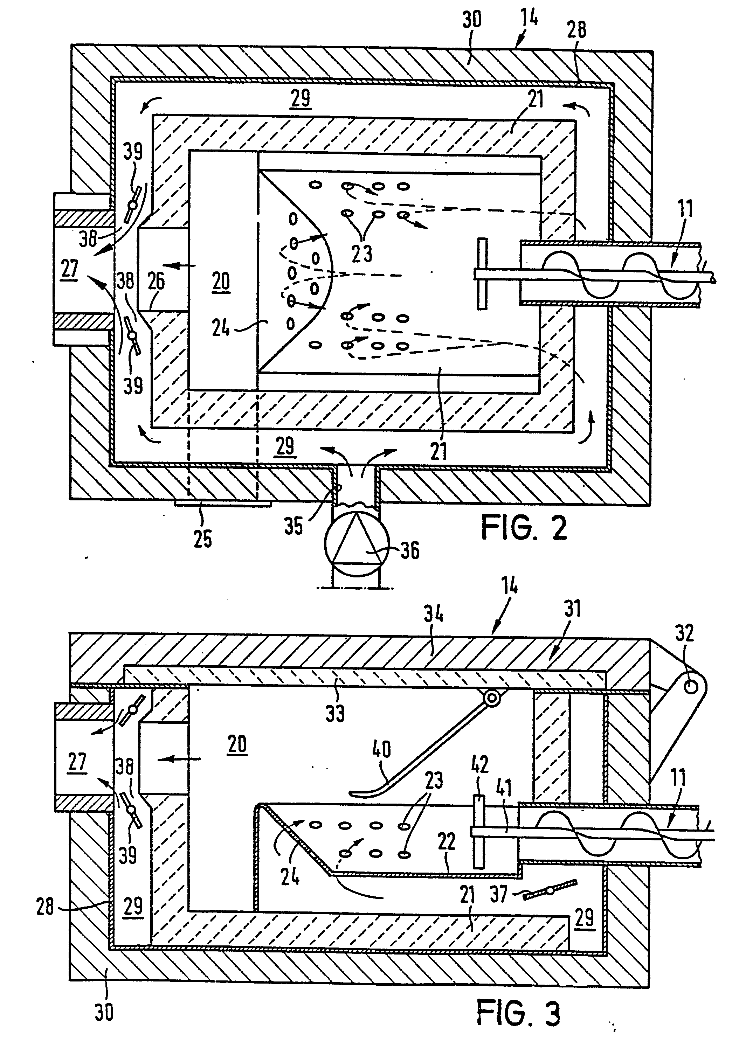

Die Entgasungsvorrichtung 14 weist gemäß Figuren 2 und 3 eine Entgasungskammer 20 auf, deren Wände 21 aus einem feuerfesten Material, z. B. Schamotte, bestehen. Die Entgasungskammer 20 ist im vorliegenden Fall quaderförmig, d. h. rechtwinklig. Sie enthält eine Wanne 22 aus hitzebeständigem Stahl. Der Wannenboden weist Löcher 23 für den Luftdurchtritt auf.

Die Förderschnecke des Schneckenförderers 11 ragt durch eine Öffnung in einer Stirnwand der Entgasungskammer 20 hindurch und endet über der Wanne 22, so daß der von dem Schneckenförderer transportierte Brennstoff in die Wanne 22 fällt und dort von dem nachfolgenden Brennstoff vorgeschoben wird. Die dem Schneckenförderer 11 abgewandte vordere Begrenzungswand 24 der Wanne 22 ist schräg. Infolge der in der Entgasungskammer 20 herrschenden hohen Temperaturen wird der Brennstoff entgast. Die in der Wanne verbleibenden Rückstände werden von dem nachdrängenden Brennstoff auf der schrägen Vorderwand 24 hochgeschoben und fallen nach dem Passieren des vorderen Wannenrandes in einen Schacht, der durch einen Deckel 25 zugänglich ist, um die Asche entfernen zu können.

Die dem Schneckenförderer 11 abgewandte Stirnwand der Entgasungskammer 20 weist eine Öffnung 26 auf, die das rückwärtige Ende des Flammenkanals 27 bildet. Der Flammenkanal 27 ist im wesentlichen rohrförmig und steht senkrecht von der vorderen Stirnwand der Entgasungskammer 20 ab. Seine Wand ist ebenfalls mit feuerfestem Material ausgekleidet.

Die aus feuerfestem Material bestehenden Seitenwände 21 der Entgasungskammer 20 sind von einem Mantel 28 aus hitzebeständigem Stahl umgeben, wobei sich zwischen den Seitenwänden 21, zu denen auch die Stirnwände gehören, die Luftkammer 29 befindet. Die Luftkammer 29 umschließt auf diese Weise die Wand 21 der Entgasungskammer 20 — in Draufsicht — vollständig. Dagegen liegt die Bodenwand der Kammer 20 gemäß Figur 3 auf der Bodenwand des Mantels 28 unmittelbar auf. Die Außenseite des Mantels 28 ist mit einer Wärmedämmschicht 30 versehen.

Die Entgasungskammer 20 und der Mantel 28 stellen kastenförmige Behältnisse dar, deren obere Ränder in einer gemeinsamen Ebene liegen und die mit einem Deckel 31 verschlossen sind. Der Deckel 31 ist über ein Gelenk 32 mit der rückwärtigen Stirnwand der Entgasungsvorrichtung verbunden, so daß er hochgeschwenkt werden kann. Die Unterseite des Deckels 31 ist mit einer feuerfesten Beschichtung 33 versehen, über der eine Dämmstoffschicht 34 angeordnet ist.

In der Mitte der Länge einer Seitenwand des Mantels 28 befindet sich ein Lufteinlaß 35, durch den hindurch über ein Gebläse 36 Außenluft in die Luftkammer 29 gedrückt wird. Jeweils ein Teil dieser Luft strömt in der Luftkammer 29 in Richtung auf die Fördereinrichtung 11 und in Richtung auf den Flammenkanal 27. Unterhalb der Fördereinrichtung 11 befinden sich in der Rückwärtigen Stirnwand der Entgasungskammer 20 Öffnungen, deren Durchlaßquerschnitt durch Regulierelemente 37 veränderbar ist. Durch diese Öffnungen gelangt die in dem Luftkanal 29 vorgewärmte Luft in den unterhalb der Wanne 22 liegenden Bereich der Entgasungskammer 20. Von dort strömt die Luft in Richtung der gezeichneten Pfeile durch die Löcher 23 und das in der Wanne 22 befindliche Brennmaterial hindurch. Die andere Luftströmung in der Luftkammer 29 strömt zu den in die Flammenkammer 27 mündenden Austrittsöffnungen 38, deren Durchlaßquerschnitt ebenfalls durch Regulierelemente 39 verändert werden kann.

Oberhalb der Wanne 22 befindet sich ein an dem Deckel 31 gelenkig befestigter Tastarm 40, der schräg von oben her auf dem in der Wanne 22 liegenden Brennmaterial aufliegt. Dieser Tastarm 40 betätigt einen (nicht dargestellten) Schalter, wenn die Höhe des Brennmaterials zu groß wird. Der Schalter steuert die Fördereinrichtung 11, die somit im Falle eines Materialstaus selbsttätig abschaltet.

Das vordere Ende der Welle 41 des Schneckenförderers 11 ist über die Förderschnecke hinaus verlängert. An diesem Ende befindet sich ein in der Wanne 22 mit der Welle 41 rotierendes Flügelrad 42. Dieses Flügelrad dient dazu, den in der Wanne 22 befindlichen Brennstoff in ständiger Bewegung zu halten und trägt zur Auflockerung und somit zur besseren Entgasung des Brennstoffes bei.

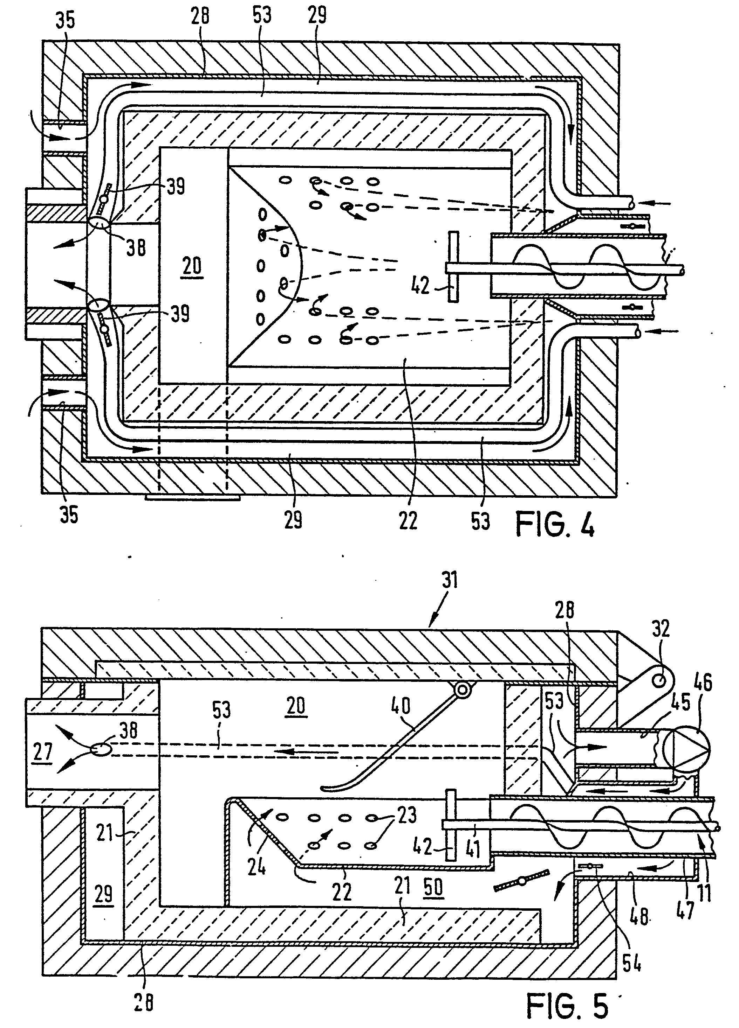

Bei dem Ausführungsbeispiel der Figuren 4 und 5 sind diejenigen Teile, die bei beiden Ausführungsbeispielen die gleiche Funktion haben, mit den gleichen Bezugszeichen versehen wie bei dem Ausführungsbeispiel der Figuren 1 und 2. Die nachfolgende Erläuterung beschränkt sich auf diejenigen Merkmale, die bei dem Ausführungsbeispiel der Figuren 4 und 5 unterschiedlich gegenüber dem vorherigen Ausführungsbeispiel sind.

Bei dem Ausführungsbeispiel der Figuren 4 und 5 weist die Luftkammer 29 mehrere Einlaßöffnungen 35 in der rückwärtigen Stirnwand des Mantels 28 auf. Durch diese Einlaßöffnungen 35 wird die Luft durch die Luftkammer 29 hindurchgesaugt, um in einen von der vorderen Stirnwand des Mantels 28 abgehenden Kanal 45 eingesaugt zu werden. Der Lufttransport geschieht durch das Gebläse 46, das mit seinem Saugeinlaß des Gebläses 46 ist mit einem die rohrförmige Wand 47 des Schneckenförderers 11 koaxial umgebenden Luftkanal 48 verbunden, der einerseits mit dem Raum 50 unterhalb der Wanne 22 und andererseits über Rohrleitungen 53 mit den in den Flammenkanal 27 mündenden Auslaßöffnungen 38 in Verbindung steht. Die Rohrleitungen 53 führen gemäß Figur 4 durch die Luftkammer 29 hindurch. Die Luftauslässe 38 sind durch Regulierelemente 39 in ihrem Querschnitt veränderbar. In gleicher Weise kann auch die Menge der in den Raum 50 einströmenden Luft durch Regulierelemente 54 verändert werden. Aus dem Raum 50 kann die Luft nur durch die Löcher 23 hindurch in den übrigen Teil der Entgasungskammer 20 einströmen. Der Raum 50 ist also durch die Standwände der Wanne 22 seitlich vollständig abgeschlossen.

Bei diesem Ausführungsbeispiel saugt das Gebläse 46 durch den Kanal 45 und die Luftkammer 29 aus den Einlaßöffnungen 35 Umgebungsluft an. Diese Luft wird in regulierbaren Mengen unter Überdruck auf den Raum 50 der Entgasungskammer 20 und die Flammenkammer 27 verteilt. Der besondere Vorteil liegt darin, daß die Wand 47 des Schneckenförderers 11 durch die sie umströmende Luft auf einem im wesentlichen konstanten Temperaturniveau gehalten wird, so daß Überhitzungen dieser Wand 47 nicht auftreten. Dadurch werden gleichzeitig Rißbildungen an der Berührungsstelle der Wand 47 mit dem Material der feuerfesten Auskleidung vermieden.

In der Schemazeichnung der Figur 1 sind die beiden zuvor beschriebenen Varianten der Luftführung angedeutet. Hierbei ist das Gebläse 36 in der in den Figuren 1 und 2 dargestellten Anordnung mit einer durchgezogenen Linie gezeichnet, während das Gebläse 46 in der in den Figuren 4 und 5 dargestellten Anordnung gestrichelt gezeichnet ist.

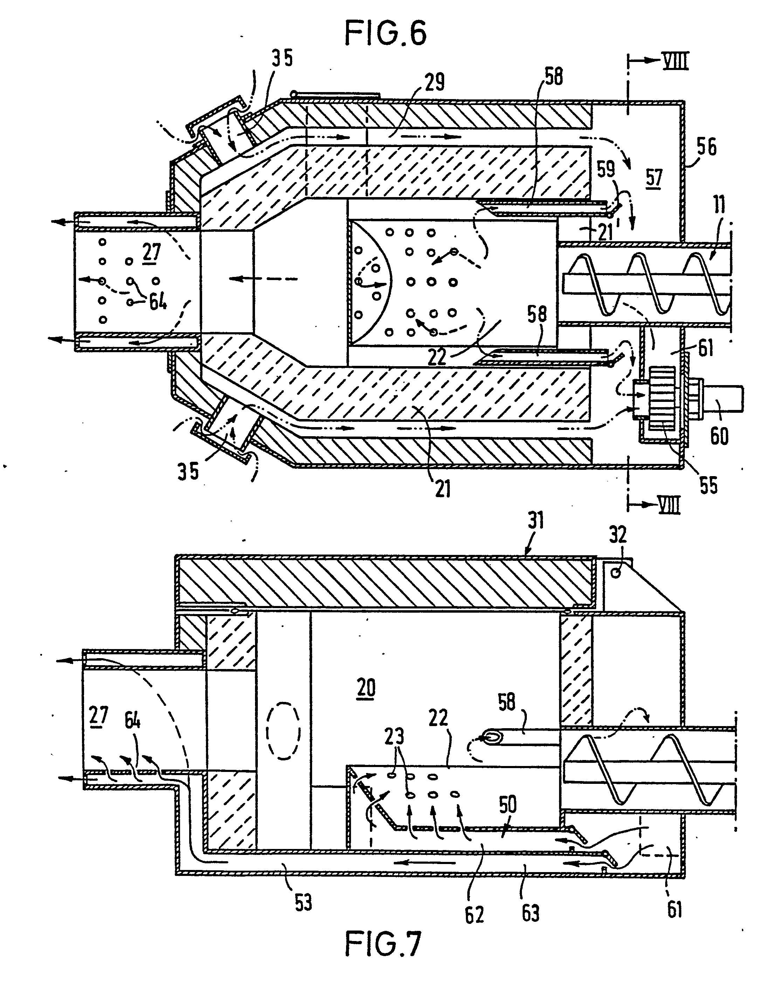

Bei dem Ausführungsbeispiel der Fig. 6 bis 8 fördert die Förderschnecke 11 ebenfalls Biomasse auf eine gelochte Wanne 22, die in der Entgasungskammer 20 angeordnet ist. Zwischen der feuerfesten stirnseitigen Rückwand 21' und der äußeren Gehäusewand 56 befindet sich eine Saugkammer 57, in der von dem Gebläse 55 ein Unterdruck erzeugt wird. In die Saugkammer 57 münden die seitlichen Luftkammern 29 ein, die mit den Lufteinlässen 35 in Verbindung stehen und von den seitlichen Wänden 21 der Entgasungskammer 20 begrenzt werden.

Aus der Entgasungskammer 20 führen Absaugkanäle 58 in die Saugkammer 57 hinein. Die Absaugkanäle 58 sind Rohre, die seitlich über dem gelochten Boden der Wanne 22 enden und einen Teil der aus der Biomasse entweichenden Schwelgase absaugen. An den Enden der Absaugkanäle 58 sind regulierbare Klappen 59 angeordnet, um die Schwelgasabsaugung verändern zu können.

Das Gebläse 55, dessen Saugöffnung in der Saugkammer 57 angeordnet ist, wird von einem Motor 60 angetrieben. Es saugt einerseits über die Absaugkanäle 58 Schwelgase und andererseits über die Luftkammern 29 vorgewärmte Frischluft an. Dieses Schwelgas/Frischluft-Gemisch wird von dem Gebläse 55 in einen Verteilerkasten 61 gefördert, dessen Auslaß mit einem ersten Kanal 62 und einem zweiten Kanal 63 in Verbindung steht. Der erste Kanal führt in den von Seitenwänden begrenzten Raum 50 unter der Wanne 22 hinein. Aus diesem Raum 50 steigt das Schwelgas/Frischluft-Gemisch durch die Öffnungen 23 hindurch auf. Der zweite Kanal 63 führt an der Entgasungskammer 20 entlang zur Flammenkammer 27. Die Flammenkammer 27 ist doppelwandig ausgebildet. Die Innenwand weist Austrittsöffnungen 64 für das Schwelgas/Frischluft-Gemisch auf.

In den Fig. 6 und 7 sind die Gasströmungen eingezeichnet. Die Frischluft, die durch die seitlichen Luftkammern 29 strömt, ist mit einer Linie aus jeweils zwei Punkten und einem Strich bezeichnet. Die Strömung des Schwelgases, das aus der Entgasungskammer 20 abgesaugt wird, ist strichpunktiert gezeichnet und das aus der Verteilerkammer 61 abströmende Schwelgas/Frischluft-Gemisch ist mit durchgezogenen Linien bezeichnet.

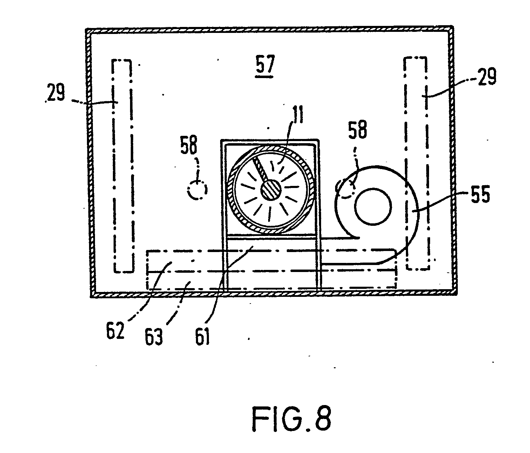

Wie aus Fig. 8 zu erkennen ist, verlaufen die Luftkammern 29 parallel zu den Seitenwänden 21 der Entgasungskammer 20. Das Gebläse 55 ist seitlich neben der Förderschnecke 11 angeordnet und es bläst in die unterhalb der Förderschnecke 11 angeordnete Verteilerkammer 61 hinein. Diese steht mit den beiden längs der Bodenwand übereinander verlaufenden Kanälen 62, 63 in Verbindung.

## Patentansprüche

1. Vorrichtung zur Fließbettentgasung von Biomassen in Heizungsanlagen, mit einer Entgasungskammer (20), die mindestens teilweise eine feuerfeste Auskleidung aufweist und eine Tragvorrichtung zur Aufnahme von Biomasse enthält, einer aus der Entgasungskammer (20) herausführenden Flammenkammer (27), mindestens einem Luft in die Entgasungskammer (20) fördernden Gebläse (36 ; 46 ; 55) und mindestens einer Wand der Entgasungskammer (20) zwischen der Auskleidung (21) und einem äußeren Mantel (28) vorgesehen, mit dem Gebläse (36, 46, 55) verbundenen Luftkammer (29), der Außenluft zugeführt wird und die im Luftweg des Gebläses der Entgasungskammer (20) vorgeschaltet ist, dadurch gekennzeichnet, daß die Tragvorrichtung eine gelochte Wanne (22) ist und daß über der Wanne (22) eine die Biomasse heranfördernde Fördereinrichtung endet, die die Biomasse auf der Wanne vorschiebt.

2. Vorrichtung nach Anspruch 1, dadurch gekennzeichnet, daß oberhalb der Wanne (22) ein Tastarm (40) befestigt ist, der bei einem Materialstau von der auf der Wanne liegenden Biomasse bewegt wird und einen Schalter zum Abschalten der Fördereinrichtung betätigt.

3. Vorrichtung nach Anspruch 1 oder 2, dadurch gekennzeichnet, daß die Fördereinrichtung (11) ein Schneckenförderer ist, und daß an dem Abwurfende der Welle (41) der Förderschnecke ein Schaufelrad (42) angebracht ist, das sich in der Wanne (22) dreht.

4. Vorrichtung nach einem Ansprüche 1 bis 3, dadurch gekennzeichnet, daß das Gebläse (36) an einem Lufteinlaß (35) der Luftkammer (29) angeordnet ist und Umgebungsluft ansaugt, und daß aus der Luftkammer (29) ein erster Auslaß in der Nähe der Fördereinrichtung (11) in die Entgasungskammer (20) und ein zweiter Auslaß (38) in die Flammenkammer (27) hineinführt.

5. Vorrichtung nach einem der Ansprüche 1 bis 3, dadurch gekennzeichnet, daß das Gebläse (46) im Strömungsweg der Luft hinter der Luftkammer (29) und vor der Entgasungskammer (20) angeordnet ist, und daß sich zwischen dem Gebläse (46) und der Entgasungskammer (20) ein in Wärmeaustausch mit der Fördereinrichtung (11) stehender Luftkanal (48) befindet.

6. Vorrichtung nach Anspruch 5, dadurch gekennzeichnet, daß der Luftkanal (48) über mindestens eine ein Regulierelement (39) enthaltende Leitung (53) mit der Flammenkammer (27) verbunden ist.

7. Vorrichtung nach einem der Ansprüche 1 bis 6, dadurch gekennzeichnet, daß aus der Entgasungskammer (20) mindestens ein der Saugwirkung des Gebläses (55) ausgesetzter Absaugkanal (58) für Schwelgase herausführt und daß die abgesaugten Schwelgase nach Vermischung mit Frischluft von dem Gebläse (55) der Flammenkammer (27) und/oder der Entgasungskammer (20) zugeführt werden.

8. Vorrichtung nach Anspruch 7, dadurch gekennzeichnet, daß an einer Stirnseite der Entgasungskammer (20) eine an das Gebläse (55) angeschlossene Saugkammer (57) angeordnet ist, die mit der Luftkammer (29) und dem Absaugkanal (58) verbunden ist und daß der Auslaß des Gebläses (55) in zwei verschiedene Kanäle (62, 63) fördert, von denen einer unterhalb der Biomasse in die Entgasungskammer (20) und der andere in die Flammenkammer (27) mündet.

## Claims

1. Device for the fluidized bed degassing of biomasses in heating apparatuses comprising a degassing chamber (20) including at least partly a refractory lining, and a support means for carrying the biomass, a flame chamber (27) extending out of the degassing chamber (20), at least one blower (36 ; 46 ; 55) conveying air into the degassing chamber (20) and at least one air chamber (29) provided in a wall of the degassing chamber (20) between the lining (21) and an outer jacket (28) and communicating with the blower (36, 46, 55), which air chamber (29) is provided with external air and which, in the air path of the blower, is connected ahead of the degassing chamber (20), characterized in that the support means is a perforated through (22) and that a conveyer means feeding the biomass ends above the trough (22) and advances the biomass on the trough.

2. Device according to claim 1, characterized in that above the trough (22) a scanning arm (40) is fixed which, with an accumulation of the material is moved by the biomass on the trough and actuates a switch for deactivating the conveyer means.

3. Device according to claim 1 or 2, characterized in that the conveyer means (11) is a worm conveyer and that a blade wheel (42) rotating in the trough (22) is mounted at the discharge end of the shaft (41) of the worm conveyer.

4. Device according to one of claims 1 to 3, characterized in that the blower (36) is positioned at an air inlet (35) of the air chamber (29) to absorb ambient air, and that from the air chamber (29) a first outlet extends into the degassing chamber (20) in the vicinity of the conveyer means (11) and that a second outlet (38) extends into the flame chamber (27).

5. Device according to one of claims 1 to 3, characterized in that in the flow path of the air, the blower (46) is provided downstream of the air chamber (29) and ahead of the degassing chamber (20) and that between the blower (46) and the degassing chamber (20), an air channel is in a heat exchange with the conveyer means (11).

6. Device according to claim 5, characterized in that the air channel (48) communicates with the flame chamber (27) via a duct (53) containing at least one control element (39).

7. Device according to one of claims 1 to 6, characterized in that at least one decomposition gas suction channel (58) exposed to the suction effect of the blower (55) extends out of the degassing chamber (20) and that the absorbed decomposition gases, upon their mixing with fresh air from the blower (55) are supplied to the flame chamber (2) and/or to the degassing chamber (20).

8. Device according to claim 7, characterized in that at the end side of the degassing chamber (20), there is arranged a suction chamber (57) connected to the blower (55) and being joined to the air chamber (29) and to the suction channel (58), the outlet of the blower (55) conveying into two different channels (62, 63) of which one ends beneath the biomass in the degassing chamber (20) and the other in the flame chamber (27).

## Revendications

1. Dispositif pour la gazéification de biomasses en lit fluide dans des installations de chauffage, comportant une chambre de gazéification (20), qui présente au moins partiellement un garnissage réfractaire et contient un dispositif de support pour la réception de la biomasse, une chambre de combustion (27) sortant à partir de la chambre de gazéification (20), au moins une soufflante (36 ; 46 ; 55) envoyant de l'air dans la chambre de gazéification (20) et au moins une chambre d'air (29) qui est prévue dans une paroi de la chambre de gazéification (20) entre le garnissage (21) et un chemisage extérieur (28), qui est en communication avec la soufflante (36, 46, 55) et reçoit un apport d'air extérieur et qui est insérée dans le parcours d'air de la soufflante de la chambre de gazéification (20), caractérisé par le fait que le dispositif de support est un bac (22) perforé et que sur le bac (22) débouche un dispositif convoyeur débitant la biomasse et faisant avancer celle-ci sur le bac.

2. Dispositif selon la revendication 1, caractérisé par le fait qu'au-dessus du bac (22) est fixé un bras palpeur (40) qui, en cas d'accumulation de matière se trouve déplacé par la biomasse reposant sur le bac et actionne un interrupteur pour arrêter la marche du dispositif convoyeur.

3. Dispositif selon la revendication 1 ou 2, caractérisé par le fait que le dispositif convoyeur (11) est un convoyeur à vis et qu'à l'extrémité de déversement de l'arbre (41) de la vis convoyeuse est montée une roue à ailettes (42) qui tourne dans le bac (22).

4. Dispositif selon l'une quelconque des revendications 1 à 3, caractérisé par le fait que la soufflante (36) est disposée dans un orifice d'admission d'air (35) de la chambre d'air (29) et aspire de l'air ambiant, et qu'à partir de la chambre d'air (29), un premier orifice de sortie débouche au voisinage du dispositif convoyeur (11) dans la chambre de gazéification (20), tandis qu'un deuxième orifice de sortie (38) débouche dans la chambre de combustion (27).

5. Dispositif selon l'une quelconque des revendications 1 à 3, caractérisé par le fait que la soufflante (46) est disposée dans le trajet d'écoulement de l'air en amont de la chambre d'air (29) et en aval de la chambre de gazéification (20) et qu'entre la soufflante (46) et la chambre de gazéification (20) se trouve un canal d'air (48) placé en échange thermique avec le dispositif convoyeur (11).

6. Dispositif selon la revendication 5, caractérisé par le fait que le canal d'air (48) est relié à la chambre de combustion (27) par au moins un conduit (53) contenant un élément de régulation (39).

7. Dispositif selon l'une quelconque des revendications 1 à 6, caractérisé par le fait qu'à partir de la chambre de gazéification (20) sort au moins un canal d'aspiration (58) pour des gaz de distillation exposé à l'action aspirante de la soufflante (55) et que les gaz de distillation évacués par aspiration sont envoyés par la soufflante (55), après mélange avec de l'air frais, dans la chambre de combustion (27) et/ou la chambre de gazéification (20).

8. Dispositif selon la revendication 7, caractérisé par le fait que sur un côté frontal de la chambre de gazéification (20) est disposée une chambre d'aspiration (57) qui est raccordée à la soufflante (55) et qui est en communication avec la chambre d'air (29) et le canal (58) et que la sortie de la soufflante (55) débite dans deux canaux différents (62; 63) dont l'un débouche au-dessous de la biomasse dans la chambre de gazéification (20) et l'autre débouche dans la chambre de combustion (27).

# FIG.1

FIG. 2

FIG. 3

2

FIG. 4

FIG. 5

# FIG.6

# FIG.7

4

FIG.8